# FASCICULE DE BREVET EUROPEEN

(11) **EP 1 900 472 B1**
(45) Date de publication et mention de la délivrance du brevet: **27.06.2012**
(21) Numéro de dépôt: 07301310.4
(22) Date de dépôt: 17.08.2007
(51) Int. Cl.: B23K 35/22, B23K 35/362, B23K 35/365, B23K 35/368, B23K 35/02, B23K 9/16, B23K 9/18, B23K 26/00

(54) **Fil, flux et procédé de soudage des aciers à forte teneur en nickel**
Draht, Flussmittel und Verfahren zum Schweißen von Stählen mit hohem Nickelgehalt
Wire, flux and method of welding steel with high nickel content

(30) Priorité: 06.09.2006 FR 0653588
(43) Date de publication de la demande: 19.03.2008
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Chovet, Corinne, 78700 Conflans-Ste-Honorine (FR); Bouillot, Claude, 78510 Triel s/Seine (FR)
(74) Mandataire: Pittis, Olivier

(56) Documents cités:
- GB-A- 1 147 753
- JP-A- 51 112 741
- JP-A- 61 262 489
- HILKES J ET AL: "ELECTRODES FOR WELDING 9% NICKEL STEEL" WELDING JOURNAL, AMERICAN WELDING SOCIETY, MIAMI, FL, US, vol. 83, no. 1, janvier 2004 (2004-01), pages 30-37, XP001222937 ISSN: 0043-2296
- STRIDH L-E ET AL: "NEW METHODS IN WELDING OF 9% NICKEL STEEL FOR LNG APPLICATIONS" WELDING IN THE WORLD, ELSEVIER / INTERNATIONAL INSTITUTE OF WELDING, ROISSY, FR, vol. 49, juillet 2005 (2005-07), pages 39-53, XP001239962 ISSN: 0043-2288
- ROSA G F; BOVE O: "automatic welding 9% nickel steel plate for large LNG storage tanks" WELDING AND METAL FABRICATION, vol. 41, no. 2, 1973, pages 62-64, XP008087478 GB
- "Automatic welding for a LNG storage tank of 9% nickel steel" ISHIKAWAJIMA-HARIMA GIHO, ISHIKAWAJIMA-HARIMA JUKOGYO K.K., TOKYO, JP, vol. 16, no. 3, mai 1976 (1976-05), pages 253-262, XP008087440 ISSN: 0578-7904

## Description

L'invention concerne le soudage homogène à haute productivité des aciers au nickel, en particulier des aciers à 9%Ni.

Les aciers à 9% de nickel, couramment appelés « aciers 9% Ni », sont des matériaux utilisés pour la construction de réservoirs ou d'autres équipements industriels destinés à un usage à température cryogénique, comme par exemple les tubes.

En effet, ces aciers sont caractérisés par une bonne résistance mécanique et aux chocs, même à la température de l'azote liquide, c'est-à-dire -196°C.

Les aciers 9% Ni sont des aciers de type bas carbone contenant environ 9% en poids de nickel et qui ont été soumis à un traitement thermique approprié pour conserver une bonne ductilité à très basse température.

Ce type d'acier est caractérisé par une teneur en carbone basse, typiquement inférieure à 0.1% en poids, et surtout un faible niveau d'impuretés, en particulier le soufre et le phosphore. En effet, un faible taux d'impuretés inclusionnaires est un facteur essentiel pour garantir une bonne résistance aux chocs à basse température et limiter le risque de fragilité de revenu.

Face à la demande croissante d'énergie, le gaz naturel liquéfié offre une alternative intéressante au produits pétroliers actuels. Pour cette raison et du fait de leurs propriétés à basse température, on utilise de plus en plus les aciers 9% Ni pour réaliser des équipements servant au stockage et au transport des fluides cryogéniques non corrosifs, tel le gaz naturel, et ce, jusqu'à des températures de l'ordre -196°C.

Or, pour la fabrication de tels équipements en acier 9% Ni, il est nécessaire d'utiliser des produits de soudage et un procédé de soudage particuliers, c'est-à-dire permettant d'atteindre le même niveau de caractéristiques mécaniques dans la zone fondue (ZF) et dans la zone affectée thermiquement (ZAT).

Autrement dit, le problème qui se pose, lors du soudage de tels aciers 9% Ni, est donc d'obtenir de bonnes propriétés mécaniques dans la ZF et la ZAT et ce, pour garantir l'intégrité de l'assemblage au moindre coût de fabrication.

Actuellement, les fils consommables utilisés pour le soudage des aciers à 9% Ni sont de deux types, à savoir les produits d'apport ferritiques pour le soudage homogène et les produits d'apport à très fortes teneurs en Ni pour le soudage hétérogène.

ELECTRODES FOR WELDING 9% NICKEL STEEL" WELDING JOURNAL, AMERICAN WELDING SOCIETY, MIAMI, FL, US, vol. 83, no. 1, janvier 2004 (2004-01), page 34 décrit les fils fourrés utilisée pour le soudage des aciers au 9% nickel, en particulier les fils NiCr60/20 (ENICrMo-3) et Nyloid 2 (ENiCrMo-6).

Le soudage hétérogène est le plus couramment utilisé. Dans ce cas, tous les procédés de soudage à l'arc peuvent être utilisés, en particulier le soudage arc submergé. L'assemblage des pièces ou tôles en acier 9% Ni est réalisé avec des fils consommables austénitiques de type base nickel contenant une très forte teneur en nickel, typiquement au moins 50 % de nickel. La soudure obtenue avec de tels consommables est austénitique et, par conséquent, ne présente pas de transition ductile-fragile. Elle présente donc de bonnes caractéristiques de résilience même à la température de l'azote liquide.

Cependant, l'utilisation de tels métaux d'apport à base Ni engendre plusieurs inconvénients, à savoir :
- malgré la forte productivité de ce procédé, le coût élevé des métaux d'apport à forte teneur en Ni, en particulier de fils fusibles, rend cette solution coûteuse donc peu compétitive au plan économique.
- certains métaux d'apport de type base nickel ont une forte sensibilité à la fissuration à chaud.
- enfin et surtout, la résistance à la rupture du métal fondu est plus faible que celle du métal de base. Par exemple, la charge à rupture de la zone fondue (ZF) peut descendre jusqu'à 640 MPa en fonction de la configuration de joint, alors que le métal de base a une charge à rupture supérieure à 700 MPa. Ceci conduit, dans le cas des réservoirs, à un surdimensionnement de l'équipement pour satisfaire les recommandations des codes de construction et, dans le cas des tubes soudés longitudinalement, ceci rend impossible la mise en forme correcte du tube après soudage.

En soudage homogène, un fil massif de composition chimique proche de celle du métal de base est utilisé, en particulier pour ce qui concerne leurs teneurs en nickel.

Associés à un procédé de soudage TIG ou MIG, les consommables ferritiques homogènes actuels permettent d'obtenir des valeurs de résilience à basse température suffisantes sans traitement thermique, soit 34 J à -196°C pour des éprouvettes de taille standard (10x10 mm) avec une résistance à la rupture compatible avec celle du métal de base.

Toutefois, l'utilisation de ces consommables, malgré leur coût avantageux, n'est pas économiquement viable du fait de la faible productivité de ces procédés.

En outre, avec d'autres procédés à plus forte productivité, et en particulier en soudage à l'arc submergé tel que décrit par le document Production of 9% Nickel Steel UOE Pipe with Ferritic Filler Submerged Arc Welding, Transactions ISU, vol.26, 1986, p. 359-366, les consommables homogènes de type fils massifs ne permettent pas d'attendre le niveau de résilience requis.

Ensuite, l'utilisation d'un fil massif n'est pas idéale car elle oblige, à chaque ajustement de composition, par exemple pour tenir compte du % de nickel dans le métal de base, de procéder à une coulée de métal pour fabriquer le fil à la composition souhaitée, ce qui est pénalisant au plan économique et engendre des difficultés de réalisation.

De plus, dans ce cas, pour atteindre le niveau de résilience requit à -196°C, il est indispensable de pratiquer un traitement thermique sur l'ensemble de l'appareillage, ce qui n'est souvent pas réalisable du fait de la situation géographique de l'équipement soudé, en particulier sur chantier, ou lorsque l'équipement à des dimensions très importantes, de plusieurs mètres, tels des tubes soudés par exemple.

Enfin, la soudure obtenue avec ce type de procédé utilisant un fil massif contient souvent une teneur en oxygène trop importante, typiquement supérieure à 0.040%.

Autrement dit, il n'existe pas actuellement de consommables de soudage, à savoir fil, flux, ou leur combinaison, ni de procédé de soudage les utilisant qui non seulement permettent d'obtenir de bonnes caractéristiques de soudure mais aussi qui soient économiquement viables et/ou réalisables au plan industriel.

Le problème est donc de proposer un fil de soudage et/ou un flux de soudage aptes à être utilisés pour souder efficacement les aciers à forte teneur en nickel, en particulier ceux à 9% Ni, ainsi qu'un procédé de soudage utilisant ce fil et/ou ce flux, et conduisant à de bonnes caractéristiques de joint soudé ou métal déposé, lesquels soient économiquement viables et puissent être mis en oeuvre aisément au plan industriel.

Selon un premier aspect l'invention propose un fil fourré pour le soudage des aciers au nickel comprenant une enveloppe en acier et des éléments de remplissage, caractérisé en ce qu'il contient, par rapport au poids du fil, de 2 à 15% de fluor, de 8 à 13 % de nickel et du fer.

Le fil fourré de l'invention est caractérisé par une teneur en fluor entre 2 et 15% exprimé en proportion de fluor (F). Toutefois, le fluor utilisable peut se présenter sous différentes formes, en particulier sous forme de spathfluor qui est préféré, mais aussi sous forme de cryolithe naturelle ou synthétique, ou de composés fluorés, tels les fluorures de Na, Li ou K , ou toute autre forme de fluor.

Selon le cas, le fil fourré de l'invention peut comprendre l'une ou plusieurs des caractéristiques suivantes :
- l'acier est un acier carbone-manganèse, de préférence la teneur en carbone de l'enveloppe est inférieure à 0.05%.
- le taux de remplissage du fil en lesdits éléments de remplissage est compris entre 8 et 40%, de préférence de 12 à 30%, par rapport au poids total du fil.
- le fer provient uniquement de l'enveloppe en acier, les éléments de remplissage étant exempts de fer, en particulier exempts de poudre de fer.
- il contient, par rapport au poids du fil, de 8 à 15% de fluor et de 9 à 11.75 % de nickel.

Par ailleurs, selon un autre aspect, l'invention propose un procédé de soudage à l'arc, par faisceau laser ou en combinant un arc avec un faisceau laser d'au moins une pièce en acier 9% nickel, dans lequel on met en oeuvre un fil fourré selon l'invention.

De préférence, il s'agit d'un procédé de soudage à l'arc submergé mettant en oeuvre un fil fourré selon l'une des revendications 1 à 5 et un flux contenant une proportion pondérale de MgO de 25 à 35%, de CaO de 20 à 30%, de SiO₂ de 10 à 15%, de Al₂O₃ de 10 à 30% et de fluor de 5 à 20%.

Avantageusement, on réalise un joint de soudure tel que la densité de passes au niveau du joint soudé soit supérieure à 2 passes par cm².

Selon encore un autre aspect, l'invention propose un flux de soudage susceptible d'être utilisé dans le procédé selon l'invention, caractérisé en ce qu'il contient une proportion pondérale de MgO de 25 à 35%, de CaO de 20 à 30%, de SiO₂ de 10 à 15%, de Al₂O₃ de 10 à 30% et de fluor de 5 à 20%.

De préférence, ledit flux comprend, en outre, au moins un constituant choisi parmi Na₂O et K₂O, la proportion en ledit au moins un constituant étant inférieure à 3% en poids.

Selon encore un autre aspect, l'invention propose de réaliser un joint de soudure ou métal déposé, en particulier susceptible d'être obtenu par mise en oeuvre d'un procédé selon l'invention et/ou par fusion d'un fil fourré selon l'invention, caractérisé en ce qu'il contient :
- de 0,010 à 0,07% de C, de préférence de 0,010 à 0,05% de C,
- de 0,02 à 0,20% de Si,
- de 0,15 à 0,6% de Mn,
- de 0,002 à 0,007% de P,
- de 0,0013 à 0,0050% de S,
- de 7 à 13% de Ni,
- de 0,002 à 0,012% de Ti,
- de 0,005 à 0,018% de Al,
- et majoritairement du Fe.
Avantageusement, le joint de soudure comprend moins de 300 ppm d'oxygène. En outre, le joint soudé peut aussi contenir du baryum, zirconium, chrome et/ou lithium, en une proportion inférieure à 2% en poids ; ces éléments pouvant se présenter sous forme métallique, d'oxydes et/ou d'un composé comprenant l'un ou plusieurs de ces éléments.

La présente invention va être mieux comprise grâce aux explications et exemples suivants donnés en références aux figures annexées.

D'une façon générale, la bonne résistance mécanique et l'excellente résilience à basse température du métal de base, c'est-à-dire des pièces à souder en acier à 9% NI par exemple, sont liées à l'amélioration de la microstructure du matériau.

La microstructure du matériau est constituée de martensite ou de bainite et d'austénite enrichie en carbone. Cette structure particulière est produite par une double normalisation suivie d'un revenu ou une trempe suivie d'un revenu. Le traitement de revenu est réalisé dans le domaine dit de température inter-critique.

Au cours de ce traitement thermique, de l'austénite va apparaître et le carbone présent dans le métal de base va migrer préférentiellement dans l'austénite. L'austénite ainsi formée riche en carbone devient stable au refroidissement jusqu'à - 200°C.

Comme la transformation austénitique n'est que partielle, la microstructure de l'acier après traitement thermique sera donc constituée de martensite à très faible teneur en carbone et d'austénite résiduelle. C'est cette microstructure particulière qui conditionne l'excellent niveau de résilience à basse température du matériau.

La teneur en austénite résiduelle optimale dépend de la teneur en carbone de l'acier. En effet, elle doit être suffisante pour piéger le carbone du métal de base mais si elle est trop élevée, l'austénite ne contient alors pas assez de carbone pour rester stable au refroidissement et se transformera en martensite. Cette teneur en austénite résiduelle est maîtrisée par le couple température / temps de traitement.

Lorsque le revenu est mal maîtrisé, plusieurs phénomènes peuvent se produire, à savoir, pendant le refroidissement, il peut se former des carbures qui fragilisent la structure, et la quantité d'austénite formée pendant le traitement peut être trop élevée et ne pas être stable, et donner alors lieu à la formation de martensite fraîche.

D'autre part, la vitesse de refroidissement après la température de revenu influence directement la ductilité d'aciers 9% Ni à basse température.

Ceci implique que des précautions particulières doivent être prises pour accomplir l'assemblage par soudage des aciers à 9% Ni. Ainsi, l'apport de chaleur par le procédé de soudage doit être bas et la température entre les passes doit être faible pour limiter les transformations de l'acier dans la zone affectée thermiquement (ZAT).

Pour les assemblages soudés, le traitement thermique se déroule toujours en deux phases : une trempe puis revenu vers 600 °C. L'austénite obtenue par le traitement de revenu n'est stable qu'à la condition que le traitement de revenu soit optimisé.

La composition chimique du métal déposé désirée doit donc prendre en compte l'équilibre entre résistance mécanique et résilience, les éléments d'alliages étant des facteurs qui affectent la résilience.

De là, la susceptibilité de la soudure à la fragilité de revenu est réduite par une diminution des éléments qui ségréguent aux joints de grains et en particulier le phosphore et le manganèse.

En particulier, le manganèse est responsable de la fragilisation est doit être le plus bas possible pour obtenir un bon niveau de résilience, y compris à -196°C. La teneur maximale en manganèse semble être liée au carbone, tandis que la teneur minimale en manganèse est liée au soufre. De là, une teneur de 0.3% en poids de Mn est efficace dans la plage habituelle de carbone, c'est-à-dire autour de 0.05%.

Par ailleurs, la teneur en phosphore doit également être contrôlée et maintenue inférieure à 0.007%.

Le soufre doit être le plus bas possible à cause de son action négative sur le risque de fissuration et son action peut être contrecarrée par l'addition de manganèse. Lorsque le soufre est inférieur à 0.005%, une teneur en manganèse de l'ordre de 0.15% doit être suffisante pour obtenir des résultats satisfaisants.

Le nickel est l'élément crucial. La teneur en nickel doit être entre 7 et 13% en poids, de préférence plus de 9% et/ou moins de 12% de nickel. En effet, en dehors de cette plage, le niveau de résilience ne peut être atteint. L'augmentation du nickel de 7 à 11% se traduit par une diminution simultanée du niveau d'énergie d'absorption maximale et de la transition ductile fragile.

Le carbone ne semble pas, par contre, avoir un effet important sur le niveau de résilience jusqu'à 0.07% en poids, de préférence la teneur en carbone est inférieure ou égale à 0.05% environ.

Le silicium joue également un rôle et il doit être présent en une teneur maximale inférieure à 0,2%.

En résumé, selon l'invention, le métal déposé sur la ou les pièces à souder comprend (% en poids) du phosphore en une teneur inférieure à 0.007%, du manganèse en une teneur comprise de préférence entre 0,15% et 0,3%, du carbone de 0.001 à 0.070%, de préférence au plus environ 0,050 %, du soufre en une teneur inférieure à 0,005%, du nickel de 7 à 13 %, du silicium en une teneur inférieure à 0,2%, et essentiellement du fer pour le reste.

Il n'est cependant pas exclus que le joint de soudure puisse comprendre également du titane et de l'aluminium.

Dans tous les cas, un taux inclusionnaire faible a tendance à accroire la ténacité.

D'une manière générale, les pièces d'acier au nickel sont assemblées pour former des réservoirs, des tubes ou d'autres structures analogues servant notamment pour le transport et le stockage de gaz naturel liquéfié (GNL) à température cryogénique, par tout procédé de soudage capable de produire un assemblage soudé qui fournit une résistance à la rupture et aux chocs adaptée à ces applications.

A ce titre, on peut utiliser les procédés de soudage MIG/MAG, TIG, laser, plasma, hybride arc/laser avec apport de fil ou à l'arc submergé sous flux, lesquels mettent en oeuvre un fil fusible, un gaz et/ou un flux de soudage ainsi qu'une source d'énergie pour fondre le fil qui est un (ou plusieurs) arc électrique, un (ou plusieurs) faisceaux laser ou une combinaison arc/laser.

Or, un assemblage soudé est caractérisé par le métal fondu, la zone affectée thermiquement (ZAT) par la source d'énergie et le métal de base à proximité de la ZAT.

Le métal fondu correspond essentiellement au fil fusible qui est fondu, et éventuellement au flux déposé et dilué par le métal base fondu pendant le soudage.

La ZAT est une partie du métal de base, c'est-à-dire du matériau constitutif de la ou des pièces soudées, qui n'est pas fondue pendant le soudage mais dont la microstructure et les propriétés mécaniques sont modifiées par la chaleur émise durant le soudage par l'arc ou le faisceau.

Partant de là, pour la construction de tubes, de réservoirs ou de tout autre équipement destiné à être en contact avec un fluide cryogénique, il est indispensable de disposer d'un procédé de soudage permettant d'obtenir une résistance à la traction et une résilience compatible avec les applications cryogéniques. Ainsi, le procédé de soudage doit permettre de produire une microstructure ductile et des propriétés mécaniques capables de satisfaire les exigences des applications cryogéniques, à savoir une résilience minimale de 34J à -196°C et une expansion latérale de 0.38 mm minimum, avec une productivité économiquement satisfaisante.

Pour obtenir une productivité satisfaisante et un niveau de résilience supérieur à 34 J à la température de l'azote liquide, les inventeurs de la présente invention ont mis en évidence que le procédé de soudage à l'arc submergé (AS) était le plus adapté car il permettait d'atteindre une productivité élevée.

En effet, la vitesse de soudage est directement proportionnelle au nombre de fil utilisé. Ainsi, avec 1 fil, la vitesse de soudage avec le procédé de soudage AS est généralement de l'ordre de 50 cm/min ou plus, alors qu'avec 5 fils, il est possible d'atteindre une vitesse de 250 cm/min.

Partant de là, il a été nécessaire de développer un fil de soudage et un flux utilisables en soudage AS selon l'invention et qui, en outre, conduisent au métal déposé dont la composition est donnée ci-avant.

Les inventeurs de la présente invention ont donc mis au point un flux spécifique pour le soudage AS permettant d'obtenir un niveau d'oxygène le plus bas possible et une teneur en soufre du métal déposé inférieure à 0.01% en poids. La composition de ce flux est donnée ci-après.

De plus, concernant le fil fusible, les inventeurs de la présente invention ont pensé à remplacer le fil massif habituellement utilisé en soudage AS par un fil fourré pour obtenir une plus grande souplesse de fabrication ainsi que d'analyse du métal fondu. La composition de ce fil fourré est également détaillée ci-après.

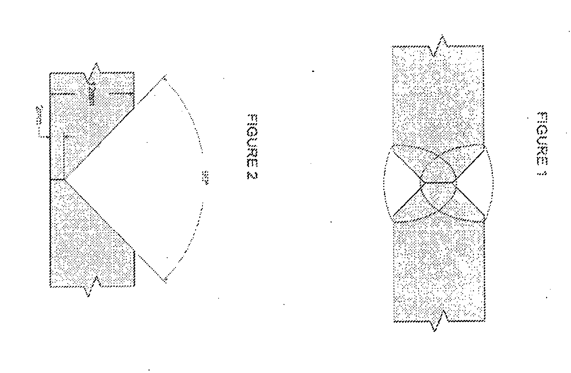

Pour ce faire, des assemblages en « Y » (Figure 2) ou en « X » (Figure 1) réalisés avec un acier 9% Ni d'une épaisseur de 12 mm de type A553 selon la norme ASTM ont été testés. Pour évaluer l'impact de l'énergie de soudage sur le niveau de résilience, le remplissage du « Y » ou du « X » a été réalisé avec un nombre variable de passes avec des procédés selon l'art antérieur et, à titre comparatif, avec le procédé AS avec fil fourré selon l'invention.

Les détails de ces essais sont donnés dans les Exemples ci-après.

### Exemple 1 : Soudage AS avec fil massif selon l'art antérieur

Des tubes de forte épaisseur sont fabriqués à partir de tôles dont deux bords longitudinaux sont usinés puis rapprochés l'un de l'autre. La mise en forme de cette tôle permet le rapprochement des bords usinés pour former un pré-tube avec profil en X comme montré en Figure 1.

Un agrafage continu avec par procédé de soudage MIG permet de maintenir l'assemblage en position avant le soudage AS proprement dit.

Ensuite, le soudage est réalisé en deux passes à l'arc submergé (AS) sous flux solide. La première passe est à l'intérieur du tube, tandis que la deuxième passe est réalisée à l'extérieur du tue de manière à assurer l'interpénétration des 2 cordons de soudure..

Nous avons réalisé un tel assemblage avec un acier 9% Ni d'une épaisseur de 12 mm de type A553 selon la norme ASTM. Pour cet essai, nous avons utilisé un flux avec un indice de basicité de 2.7 selon Bonisevsky. Le produit d'apport est un fil massif de diamètre égal à 1.2 mm à 9% de nickel.

Plus précisément, le flux est un flux du commerce de type CaO-MgO-Al₂O₃ disponible auprès de la société Oerlikon sous la référence OP76, tandis que le fil massif mis en oeuvre est aussi un fil du commerce disponible auprès de la société Kobe Steel sous la référence TGS-9N.

Les paramètres de soudage sont donnés dans le Tableau 1 suivants. Les autres conditions opératoires mises en oeuvre sont celles classiquement utilisées en procédé de soudage AS.

**Tableau 1**

| | Polarité du courant | Intensité (en A) | Tension (en V) | Vitesse de soudage |
|---|---|---|---|---|
| Première passe « Intérieur tube » | AC | 370 | 32 | 80 cm/min |
| Deuxième passe « Extérieur tube » | AC | 410 | 32 | 80 cm/min |

| | | | | |
|---|---|---|---|---|
| AC : courant alternatif | | | | |

Les tubes ainsi soudés sont soumis à des tests de résilience classiques (type Charpy) qui montrent qu'à l'état brut de soudage, les valeurs de résilience obtenues sont inférieures à 34 J, malgré une énergie de soudage de 9 kJ/cm et dès lors, pour obtenir des valeurs satisfaisantes, c'est-à-dire d'au moins 34 J, il est indispensable de réaliser un traitement thermique post soudage comme décrit précédemment, ce qui posent les problèmes mentionnés ci-avant.

### Exemple 2 : soudage en TIG multi-passes avec fil massif selon l'art antérieur

Un assemblage en « Y » analogue à celui de l'Exemple 1 a été soudé par mise en oeuvre d'un procédé TIG classique en 10 passes successives à une vitesse de soudage de 15 cm/min.

Les conditions opératoires du procédé TIG sont les conditions classiques mises en oeuvre pour ce type de procédé et le fil utilisé est celui de l'Exemple 1.

Le niveau de résilience et la résistance à la traction de l'assemblage ainsi soudé sont satisfaisants puisque supérieur à 34J.

Cependant, comparativement à la procédure habituelle de soudage des tubes en 2 passes, la productivité est considérablement réduite et incompatible avec une production à grande échelle étant donné que la vitesse de soudage obtenue est très faible du fait d'un nombre de passes important pour permettre le remplissage du profil en « Y ».

### Exemple 3 : Soudage AS avec fil fourré selon l'invention

Afin de vérifier l'efficacité du procédé de soudage AS avec fil fourré et flux selon l'invention, on a réalisé un soudage, comme pour l'Exemple 1, mais d'un assemblage avec profil en « Y », comme montré sur la Figure 2.

Autrement dit, le procédé mis en oeuvre dans l'Exemple 3 est un procédé de soudage à l'arc submergé de pièces en acier à 9% Ni avec profil en « Y » (comme dans l'Exemple 2) mettant en oeuvre un fil fourré et un flux en poudre.

Comme déjà dit, le flux utilisé doit satisfaire un certain nombre de contraintes pour respecter le niveau de résilience à -196°C et limiter le risque de fissuration à froid. Le niveau de résilience dépend principalement de la teneur en silicium et oxygène.

Avec les procédés TIG et MIG/MAG, le niveau d'oxygène et de silicium peuvent être très bas et il est possible d'obtenir un niveau de silicium équivalent au métal d'apport, soit environ 0.05% et 50 ppm pour l'oxygène. Cependant, en soudage à l'arc submergé, les flux de soudage et les fils massifs du marché ne permettent pas d'atteindre un niveau d'oxygène aussi faible. Généralement, la teneur en oxygène est de l'ordre de 300 ppm pour les flux basiques selon la classification de Bonisevsky.

Le développement d'un nouveau flux de soudage avec réduction drastique des teneurs en silicium et en oxygène, a été indispensable. Le Tableau 2 propose une composition de flux répondant à ces critères et utilisée dans le cadre de l'Exemple 3.

**Tableau 2 : composition du flux**

| ZrO₂ | MgO | Na₂O | Fe₂O₃ | Cr₂O₃ | BaO | TiO₂ | MnO | CaOT | SiO₂ | K₂O | P₂O₅ | Al₂O₃ | F |
|---|---|---|---|---|---|---|---|---|---|---|---|---|---|
| 0 | 31 | 1.1 | 0.4 | 0 | 0 | 0.05 | 0.8 | 24 | 13 | 1.2 | 0.03 | 18 | 11 |

Il n'existe pas à ce jour de fil fourré homogène pour le soudage des aciers à 9% Ni adaptés pour le procédé arc submergé. Les produits consommables existants sont des fils massifs, lesquels posent les problèmes susmentionnés.

De là, afin d'accroître notamment la productivité du procédé de soudage, les inventeurs de la présente invention ont mis au point et utilisé dans cet Exemple 3, un fil fourré avec enveloppe en acier carbone-manganèse et contenant des éléments de remplissage.

Plus particulièrement, par rapport au poids total du fil, les éléments de remplissage contiennent environ 12% de fluor et 11 % de nickel mais sont dépourvus de fer en poudre. En effet, une des originalités du fil fourré de l'invention est d'être exempt de poudre de fer, le fer n'étant apporté que par l'enveloppe ou feuillard.

L'utilisation de ce couple flux/fil fourré homogène dans un procédé de soudage AS permet alors d'atteindre le niveau de résilience souhaité à -196°C, comme le montre les résultats d'essais obtenus et consignés ci-après dans le Tableau 3 où sont consignés les résultats obtenus dans les Exemples 1 et 2 de l'art antérieur et l'Exemple 3 (Essais A, B et C) selon l'invention.

**Tableau 3 : Résultats d'essais comparatifs**

| Essai | Exemple 1 | Exemple 2 | A | B | C |
|---|---|---|---|---|---|
| Type de préparation (profil à souder) | X | Y | Y | Y | Y |
| Nombre de passes | 2 | 10 | 5 | 8 | 4 |
| Energie de soudage (kJ/cm) | 9 | 5 | 12 | 7 | 14 |
| Résilience moyenne (J) à -196°C | 8 | 200 | 38 | 34 | 48 |
| Expansion latérale (mm) | ND | ND | 0.45 | 0.46 | 0.7 |
| Vitesse de soudage (cm/min) | 60 | 15 | 60 | 60 | 60 |

| | | | | | |
|---|---|---|---|---|---|
| ND : non déterminé | | | | | |

Les résultats obtenus montrent qu'il faut au moins 4 passes avec un chanfrein en Y pour obtenir un niveau de résilience suffisant en soudage AS.

La comparaison de l'énergie de soudage entre l'essai en configuration X avec 2 passes de soudage (Ex. 1) et l'essai C de l'invention avec chanfrein Y à 4 passes montre qu'une énergie de soudage très faible n'est pas forcément associée à un bon niveau de résilience. La soudure obtenue à l'essai C permet d'atteindre une résistance à la rupture compatible avec le code de construction des appareillages cryogéniques et une résistance aux chocs supérieure à 34 J à -196°C, tout en ayant une productivité compatible avec les impératifs économiques des constructeurs, ce qui n'est pas le cas pour l'Exemple 1 alors que le procédé de soudage est aussi un procédé AS.

L'essai C permet d'obtenir un faible niveau d'impuretés. De plus, la microstructure souhaitée est obtenue par l'utilisation d'une composition chimique appropriée du métal fondu et le contrôle du cycle thermique.

Par ailleurs, les conditions de l'Exemple 2 conduisant à des résiliences très bonnes mais cela se fait au détriment de la productivité car la vitesse de soudage atteinte est d'à peine 15 cm/min, alors que, dans les autres exemples, elle est de l'ordre de 60 cm/min. Une vitesse aussi faible que celle obtenue dans l'Exemple 2 n'est pas admissible au plan industriel.

On comprend immédiatement les limites des procédés de l'art antérieur (Ex. 1 et 2) par rapport au procédé de l'invention (essais A à C) qui permet d'obtenir non seulement de bonnes résiliences mais aussi des vitesses de soudage élevées et compatibles avec une utilisation au plan industriel.

Au delà de la maîtrise de la composition chimique de la zone fondue, la procédure de soudage (multiplier le nombre de passes) est un paramètre important pour l'obtention de valeurs de résilience satisfaisantes, tant en zone fondue qu'en zone thermiquement affectée.

A noter qu'une faible énergie de soudage est souhaitée pour obtenir un refroidissement rapide de l'assemblage soudé, l'énergie de soudage étant définie comme le produit du voltage et du courant de soudage divisé par la vitesse de soudage. L'énergie de soudage dans le cadre de l'invention est préférentiellement de 8 à 15 kJ/cm.

Au vu des résultats du Tableau 3, les inventeurs ont cherché à comprendre pourquoi, malgré une énergie de soudage faible (Ex. 1), la résilience obtenue était mauvaise, car inférieure à 34 J.

Comme dit, une explication de ces résultats est liée au nombre de passes réalisées.

De là, afin de mieux contrôler le procédé de soudage de l'invention, on a défini un nouveau paramètre appelé « densité de passes » qui est le nombre de passes par cm².

Pour calculer la densité de passe, on utilise la macrographie d'une tranche de l'assemblage réalisé. Cette macrographie permet de mesurer la surface de la zone fondue de toutes les passes et de compter le nombre de passes réalisées. Le rapport de ces deux valeurs (surface fondue/nombre passes) donne la densité de passes.

Le Tableau 4 ci-après donnent les valeurs de densité de passes et de résilience obtenues pour l'Exemple 1 et pour les essais de l'Exemple 3.

**Tableau 4 : Résultats d'essais**

| Essais | Ex.1 | A | B | C |
|---|---|---|---|---|
| Densité de passes (nb/cm²) | 1.7 | 3 | 5 | 2.6 |
| Résilience moyenne (J) à -196°C | 8 | 38 | 34 | 48 |

Les résultats du Tableau 4 montrent qu'une densité de passes supérieure à 2 passes par cm² est nécessaire pour obtenir une bonne résilience (> 34 J).

### Exemple 4 : Etude comparative de la teneur en oxygène du métal déposé

L'exemple 4 vise à comparer l'impact favorable de l'utilisation d'un fil fourré selon l'invention au-delà de la souplesse d'analyse, en particulier sur la teneur en oxygène des soudures par rapport à un fil massif de l'art antérieur lorsqu'ils sont utilisés en soudage AS.

Pour caf ire, des cordons de soudures ont été réalisés sur des tôles en acier à 9% Ni avec un fil fourré selon l'invention et, à titre comparatif, avec un fil massif selon l'Exemple 1 et ce, dans les mêmes conditions opératoires, en particulier avec un même flux et les mêmes énergies de soudage.

Les résultats obtenus sont consignés dans le Tableau 5 suivant.

**Tableau 5**

| | O (ppm) |
|---|---|
| Fil massif de l'Exemple 1 (art antérieur) | 310 |
| Fil fourré de l'Exemple 3 (invention) | 250 |

Ces résultats sont particulièrement surprenants car, du fait de l'utilisation d'un fil fourré selon l'invention, on se serait attendu à obtenir une proportion d'oxygène dans le métal déposé supérieure à celle obtenue avec le fil massif car la poudre contenue dans les fils fourrés est réputée apportée une quantité importante d'oxygène dans la soudure.

Or, les résultats obtenus montrent qu'avec un fil fourré selon l'invention, ça n'est pas le cas, en particulier du fait de l'absence de poudre de fer dans les éléments de remplissage du fil fourré de l'invention.

Il s'ensuit que l'utilisation d'un fil fourré couplé à l'utilisation d'un flux basique selon l'invention, permet d'avoir une teneur en oxygène dans la soudure inférieure à celle obtenue avec un fil massif et un flux basique. Cette diminution de la teneur en oxygène est favorable à l'obtention de bonnes valeurs de résiliences.

La présente invention conduit donc, comme le montrent les résultats ci avant, à un procédé de soudage efficace permettant d'assembler de l'acier à 9% Ni pour applications cryogéniques avec une productivité importante, en garantissant des caractéristiques de traction du même niveau que celles du métal de base et des propriétés de résilience et d'expansion latérale à très basses températures supérieures aux minima requis par les codes de construction.

Autrement dit, le procédé de soudage de l'invention permet d'obtenir une microstructure ductile et des propriétés mécaniques capable de satisfaire les exigences des applications cryogéniques à -196°C, soit une résilience minimale de 34 J à -196°C et une expansion latérale de 0.38 mm minimum, avec une productivité économiquement satisfaisante.

## Revendications

1. Fil fourré pour le soudage des aciers 9% nickel comprenant une enveloppe en acier et des éléments de remplissage, **caractérisé en ce qu'**il contient, par rapport au poids du fil, de 2 à 15% de fluor, de 8 à 13 % de nickel et du fer.

2. Fil fourré selon la revendication 1, **caractérisé en ce que** l'acier est un acier carbone-manganèse, de préférence la teneur en carbone de l'enveloppe est inférieure à 0.05%.

3. Fil fourré selon l'une des revendications 1 ou 2, **caractérisé en ce que** le taux de remplissage du fil en lesdits éléments de remplissage est compris entre 8 et 40%, de préférence de 12 à 30%, par rapport au poids total du fil.

4. Fil fourré selon l'une des revendication 1 à 3, **caractérisé en ce que** le fer provient uniquement de l'enveloppe en acier, les éléments de remplissage étant exempts de fer, en particulier exempts de poudre de fer.

5. Fil fourré selon l'une des revendication 1 à 4, **caractérisé en ce qu'**il contient, par rapport au poids du fil, de 8 à 15% de fluor et de 9 à 11.75 % de nickel.

6. Procédé de soudage à l'arc, par faisceau laser ou en combinant un arc avec un faisceau laser d'au moins une pièce en acier 9% nickel, dans lequel on met en oeuvre un fil fourré selon l'une des revendications 1 à 5.

7. Procédé selon la revendication 6, **caractérisé en ce qu'**il s'agit d'un procédé de soudage à l'arc submergé mettant en oeuvre un fil fourré selon l'une des revendications 1 à 5 et un flux contenant une proportion pondérale de MgO de 25 à 35%, de CaO de 20 à 30%, de SiO₂ de 10 à 15%, de Al₂O₃ de 10 à 30% et de fluor de 5 à 20%.

8. Procédé selon l'une des revendication 6 à 8, **caractérisé en ce qu'**on réalise un joint de soudure tel que la densité de passes au niveau du joint soudé soit supérieure à 2 passes par cm².

9. Flux de soudage susceptible d'être utilisé dans le procédé selon la revendication 7, **caractérisé en ce qu'**il contient une proportion pondérale de MgO de 25 à 35%, de CaO de 20 à 30%, de SiO₂ de 10 à 15%, de Al₂O₃ de 10 à 30% et de fluor de 5 à 20%.

10. Flux selon la revendication 10, **caractérisé en ce qu'**il comprend, en outre, au moins un constituant choisi parmi Na₂O et K₂O, la proportion en ledit au moins un constituant étant inférieure à 3% en poids.

11. Joint de soudure ou métal déposé susceptible d'être obtenu par mise en oeuvre d'un procédé selon l'une des revendication 6 à 9 et/ou par fusion d'un fil fourré selon l'une des revendication 1 à 5, **caractérisé en ce qu'**il contient
- de 0,010 à 0,07% de C, de préférence de 0,010 à 0,05% de C,
- de 0,02 à 0,20% de Si,
- de 0,15 à 0,6% de Mn,
- de 0,002 à 0,007% de P,
- de 0,0013 à 0,0050% de S,
- de7à13%deNi,
- de 0,002 à 0,012% de Ti,
- de 0,005 à 0,018% de Al,
- et majoritairement du Fe.

12. Joint de soudure ou métal déposé selon la revendication 12, **caractérisé en ce qu'**il contient, en outre, moins de 300 ppm d'oxygène.

## Claims

1. Flux-cored wire for welding 9 % nickel steels, comprising a steel casing and filling elements, **characterised in that** it contains, with respect to the weight of the wire, from 2 to 15 % fluorine, from 8 to 13 % nickel, and iron.

2. Flux-cored wire according to claim 1, **characterised in that** the steel is a carbon-manganese steel, the carbon content of the casing preferably being less than 0.05 %.

3. Flux-cored wire according to either claim 1 or claim 2, **characterised in that** the degree to which the wire is filled with said filling elements is between 8 and 40 %, preferably from 12 to 30 %, with respect to the total weight of the wire.

4. Flux-cored wire according to any one of claims 1 to 3, **characterised in that** the iron is found only in the steel casing, the filling elements being free from iron, in particular free from iron powder.

5. Flux-cored wire according to any one of claims 1 to 4, **characterised in that** it contains, with respect to the weight of the wire, from 8 to 15 % fluorine and from 9 to 11.75 % nickel.

6. Method for arc welding, welding by laser beam or by combining an arc and a laser beam, at least one workpiece made of 9 % nickel steel, wherein a flux-cored wire according to any one of claims 1 to 5 is employed.

7. Method according to claim 6, **characterised in that** it is a submerged arc welding method which employs a flux-cored wire according to any one of claims 1 to 5 and a flux containing, as a proportion by weight, 25 to 35 % MgO, 20 to 30 % CaO, 10 to 15 % SiO₂, 10 to 30 % Al₂O₃ and 5 to 20 % fluorine.

8. Method according to any one of claims 6 to 8, **characterised in that** a weld joint is produced such that the density of passes in the region of the welded joint is greater than 2 passes per cm².

9. Welding flux that can be used in the method according to claim 7, **characterised in that** it contains, as a proportion by weight, 25 to 35 % MgO, 20 to 30 % CaO, 10 to 15 % SiO₂, 10 to 30 % Al₂O₃ and 5 to 20 % fluorine.

10. Flux according to claim 10, **characterised in that** it further comprises at least one component chosen from Na₂O and K₂O, the proportion of said at least one component being less than 3 % by weight.

11. Weld joint or deposited metal that can be obtained by carrying out a method according to any one of claims 6 to 9 and/or by melting a flux-cored wire according to any one of claims 1 to 5, **characterised in that** it contains:
- from 0.010 to 0.07 % C, preferably from 0.010 to 0.05 % C;
- from 0.02 to 0.20 % Si;
- from 0.15 to 0.6 % Mn;
- from 0.002 to 0.007 % P;
- from 0.0013 to 0.0050 % S;
- from 7 to 13 % Ni;
- from 0.002 to 0.012 % Ti;
- from 0.005 to 0.018 % Al;
- and predominantly Fe.

12. Weld joint or deposited metal according to claim 12, **characterised in that** it further contains less than 300 ppm oxygen.

## Patentansprüche

1. Fülldraht zum Schweißen von 9%-Nickelstählen, der eine Umhüllung aus Stahl und Füllelemente umfasst, **dadurch gekennzeichnet, dass** er, im Verhältnis zum Gewicht des Drahts, von 2 bis 15 % Fluor, von 8 bis 13 % Nickel und Eisen enthält.

2. Fülldraht nach Anspruch 1, **dadurch gekennzeichnet, dass** der Stahl ein Kohlenstoff-Mangan-Stahl ist, wobei der Kohlenstoffgehalt der Umhüllung vorzugsweise unter 0,05 % liegt.

3. Fülldraht nach einem der Ansprüche 1 oder 2, **dadurch gekennzeichnet, dass** der Füllgrad des Drahts mit den Füllelementen zwischen 8 und 40 %, vorzugsweise von 12 bis 30 %, im Verhältnis zum Gesamtgewicht des Drahts beträgt.

4. Fülldraht nach einem der Ansprüche 1 bis 3, **dadurch gekennzeichnet, dass** das Eisen ausschließlich aus der Stahlumhüllung stammt, wobei die Füllelemente frei von Eisen sind, insbesondere frei von Eisenpulver.

5. Fülldraht nach einem der Ansprüche 1 bis 4, **dadurch gekennzeichnet, dass** er, im Verhältnis zum Gewicht des Drahts, von 8 bis 15 % Fluor und von 9 bis 11,75% Nickel enthält.

6. Verfahren zum Schweißen von mindestens einem Werkstück aus 9%-Nickelstahl mit Lichtbogen, mit Laserstrahl oder durch Kombination eines Lichtbogens mit einem Laserstrahl, wobei ein Fülldraht nach einem der Ansprüche 1 bis 5 verwendet wird.

7. Verfahren nach Anspruch 6, **dadurch gekennzeichnet, dass** es sich um ein Unterpulverschweißverfahren handelt, bei dem ein Fülldraht nach einem der Ansprüche 1 bis 5 und ein Flussmittel, das einen Gewichtsanteil MgO von 25 bis 35 %, CaO von 20 bis 30 %, SiO₂ von 10 bis 15 %, Al₂O₃ von 10 bis 30 % und Fluor von 5 bis 20 % enthält, verwendet wird.

8. Verfahren nach einem der Ansprüche 6 bis 8, **dadurch gekennzeichnet, dass** eine Schweißverbindung hergestellt wird, sodass die Raupendichte im Bereich der geschweißten Verbindung über 2 Raupen pro cm² beträgt.

9. Flussmittel zum Schweißen, das in dem Verfahren nach Anspruch 7 verwendet werden kann, **dadurch gekennzeichnet, dass** es einen Gewichtsanteil MgO von 25 bis 35 %, CaO von 20 bis 30 %, Si0₂ von 10 bis 15 %, Al₂O₃ von 10 bis 30 % und Fluor von 5 bis 20 % enthält.

10. Flussmittel nach Anspruch 10, **dadurch gekennzeichnet, dass** es ferner mindestens einen Bestandteil ausgewählt aus Na₂O und K₂O umfasst, wobei der Anteil des mindestens einen Bestandteils unter 3 Gewichts-% liegt.

11. Schweißverbindung oder aufgetragenes Schweißgut, die bzw. das durch Verwendung eines Verfahrens nach einem der Ansprüche 6 bis 9 und/oder durch Abschmelzen eines Fülldrahts nach einem der Ansprüche 1 bis 5 erhalten wird, **dadurch gekennzeichnet, dass** sie bzw. es Folgendes enthält:
- von 0,010 bis 0,07 % C, vorzugsweise von 0,010 bis 0,05 % C,
- von 0,02 bis 0,20 % Si,
- von 0,15 bis 0,6 % Mn,
- von 0,002 bis 0,007 % P,
- von 0,0013 bis 0,0050 % S,
- von 7 bis 13 % Ni,
- von 0,002 bis 0,012 % Ti,
- von 0,005 bis 0,018 % Al,
- und mehrheitlich Fe.

12. Schweißverbindung oder aufgetragenes Schweißgut nach Anspruch 12, **dadurch gekennzeichnet, dass** sie bzw. es ferner mindestens 300 ppm Sauerstoff enthält.
